# EUROPÄISCHE PATENTSCHRIFT

(11) **EP 3 545 612 B1**
(45) Veröffentlichungstag und Bekanntmachung des Hinweises auf die Patenterteilung: **17.02.2021**
(21) Anmeldenummer: 17807801.0
(22) Anmeldetag: 22.11.2017
(51) Int. Cl.: H02K 7/14, H02K 1/27

(54) **VERFAHREN ZUM BETRIEB EINES BÜRSTENLOSEN ELEKTROMOTORS EINES KRAFTFAHRZEUGS**
METHOD FOR OPERATING A BRUSHLESS ELECTRIC MOTOR OF A MOTOR VEHICLE
PROCÉDÉ POUR FAIRE FONCTIONNER UN MOTEUR ÉLECTRIQUE SANS BALAIS D'UN VÉHICULE À MOTEUR

(30) Priorität: 24.11.2016 DE 102016223349
(43) Veröffentlichungstag der Anmeldung: 02.10.2019
(73) Patentinhaber: Brose Fahrzeugteile SE & Co. Kommanditgesellschaft, Würzburg, 97076 Würzburg (DE)
(72) Erfinder: SCHRÖDER, Hans-Joachim, 65189 Wiesbaden (DE); STEINSHORN, Axel, 97957 Wittighausen (DE); DIETZ, Armin, 90607 Rückersdorf (DE)
(74) Vertreter: FDST Patentanwälte
(86) Internationale Anmeldenummer: PCT/EP2017/079999
(87) Internationale Veröffentlichungsnummer: WO 2018/095946

(56) Entgegenhaltungen:
- DE-A1-102010 001 705
- DE-A1-102015 120 920
- US-A1- 2005 225 270
- US-A1- 2014 361 613

## Beschreibung

Die Erfindung betrifft ein Verfahren zum Betrieb eines bürstenlosen Elektromotors eines Kraftfahrzeugs. Der Elektromotor ist bevorzugt ein Bestandteil eines elektromotorischen Kältemittelverdichters. Die Erfindung betrifft ferner ein Aggregat eines Kraftfahrzeugs, wie einen elektromotorischen Kältemittelverdichter.

Kraftfahrzeuge weisen üblicherweise eine Klimaanlage auf, mittels derer eine Temperierung eines Innenraums des Kraftfahrzeugs erfolgt. Auch werden bei mittels eines Elektromotors angetriebenen Kraftfahrzeugen die benötigten Energiespeicher, wie eine Hochvoltbatterie, gekühlt. Die Klimaanlage weist einen Kältemittelkreislauf auf, der einen Kältemittelverdichter, diesem nachgeschaltet einen Kondensator sowie diesem fluidtechnisch nachgeschaltet einen Verdampfer umfasst. Diesem ist fluidtechnisch ein weiterer Wärmetauscher nachgeschaltet, der in thermischem Kontakt mit etwaigen Energiezellen des Hochvoltenergiespeichers oder mit einer Gebläseleitung ist, die in den Innenraum des Kraftfahrzeugs führt. Der Kältekreislauf ist mit einem Kältemittel befüllt, wie R134a, R1234yf oder CO2.

Bei Betrieb wird mittels des Kältemittelverdichters ein Druck des Kältemittels erhöht, was zu einer Temperaturerhöhung des Kältemittels führt. Dieses wird zu dem Kondensator geleitet, der in thermischem Kontakt mit einer Umgebung des Kraftfahrzeugs ist. Hierbei erfolgt eine Temperaturerniedrigung des Kältemittels, welches in dem nachgeschalteten Verdampfer wiederum auf den ursprünglichen Druck entspannt wird, weshalb die Temperatur des Kältemittels weiter verringert wird. In dem nachgeschalteten Wärmetauscher wird von dem mit dem Wärmetauscher thermisch kontaktierten Bauteil thermische Energie auf das Kältemittel übertragen, was zu einer Abkühlung des Bauteils und einer Erwärmung des Kältemittels führt. Das erwärmte Kältemittel wird zum Schließen des Kältemittelkreislaufs erneut dem Kältemittelverdichter zugeführt.

Um die Leistung des Kältemittelverdichters unabhängig von einer Drehzahl einer Verbrennungskraftmaschine des Kraftfahrzeugs einzustellen, weist dieser einen Elektromotor auf, mittels dessen ein Verdichterkopf angetrieben ist, der beispielsweise ein Scrollverdichterkopf ist. Mit anderen Worten ist der Kältemittelverdichter ein elektromotorischer Kältemittelverdichter. Der Elektromotor ist üblicherweise ein bürstenloser Elektromotor, der mittels eines Umrichters betrieben ist. Hierbei weist der Elektromotor üblicherweise drei Phasen auf und der Umrichter ist als sogenannter B6-Umrichter ausgestaltet. Sofern der Elektromotor bei vergleichsweise geringen Spannungen und/oder einer vergleichsweise großen Leistungsanforderung betrieben wird, ist ein vergleichsweise großer Stromfluss über die Phasen erforderlich. Daher müssen sämtliche elektrischen und elektronischen Bauteile auf den erhöhten Stromfluss angepasst werden, was zu erhöhten Herstellungskosten führt.

Eine Alternative hierzu ist die Fertigung des Elektromotors mit einer größeren Anzahl von Phasen, beispielsweise sechs Phasen und einer Ausgestaltung des Elektromotors als sogenannter B12-Umrichter. Hierbei werden jeweils drei Phasen des Elektromotors zu einem Teilmotor zusammengefasst. Es existieren prinzipiell zwei unterschiedliche Möglichkeiten der Anordnungen der beiden Teilmotoren zueinander. So können diese entweder ineinander versetzt angeordnet werden, sodass sich ein drehsymmetrischer Aufbau des vollständigen Elektromotors ergibt. Aufgrund des symmetrischen Aufbaus ist hierbei eine Ansteuerung vereinfacht. Zudem ergeben sich keine Unsymmetrien bei der Ansteuerung und beim Betrieb des Elektromotors. Da die einzelnen Phasen jedoch ineinander versetzt sind, ist eine Erstellung dieser mittels eines Wickeldrahts erschwert. Bei der alternativen Ausgestaltung des Elektromotors sind die beiden Teilmotoren abschnittsweise zueinander angeordnet, sodass jeder Teilmotor im Wesentlichen halbmondförmig ausgestaltet ist. Infolgedessen ist eine Erstellung der einzelnen Phasen der Teilmotoren mittels Wickeln vereinfacht. Jedoch ist aufgrund des unsymmetrischen Aufbaus die Ansteuerung erschwert, und es ergeben sich unsymmetrische Stromflüsse über den Umrichter, was wiederum zu einer erhöhten Belastung führt.

Aus DE 10 2010 001 705 A1 ist eine elektrische Maschine mit zwei Statoren und zwei Rotoren bekannt. Hierbei sind die beiden Rotoren auf einer gemeinsamen Welle angeordnet. Die beiden Statoren und Rotoren sind in axialer Richtung zueinander versetzt.

Aus US 2005/225270 A1 ist ein Verfahren zur Ansteuerung mehrere Umrichter bekannt, mittels derer separate Elektromotoren betrieben sind. Hierbei werden die Schaltsignale der beiden Umrichter miteinander überlappt, sodass ein Rippelstrom verringert ist.

Aus US 2014/361613 A1 ist ein System mit mehreren Umrichtern bekannt. Diese werden mittels eines Controllers gesteuert. Mittels dessen wird für jeden der Umrichter eine Trägerfrequenz bereitgestellt und die Umrichter miteinander synchronisiert. Die Trägerfrequenzen sind um einen bestimmten Winkel zueinander verschoben, sodass ein Stromfluss reduziert ist.

Die DE102015120920A1 zeigt einen bürstenlosen Gleichstrommotor mit zwei auf dem Statorumfang versetzt angeordneten Teilmotoren um einen gemeinsamen Läufer.

Der Erfindung liegt die Aufgabe zugrunde, ein besonders geeignetes Verfahren zum Betrieb eines bürstenlosen Elektromotors eines Kraftfahrzeugs sowie ein besonders geeignetes Aggregat eines Kraftfahrzeugs anzugeben, wobei insbesondere Herstellungskosten verringert und vorzugsweise eine Zuverlässigkeit erhöht ist.

Hinsichtlich des Verfahrens wird diese Aufgabe durch die Merkmale des Anspruchs 1 und hinsichtlich des Aggregats durch die Merkmale des Anspruchs 10 erfindungsgemäß gelöst. Vorteilhafte Weiterbildungen und Ausgestaltungen sind Gegenstand der jeweiligen Unteransprüche.

Das Verfahren dient dem Betrieb eines bürstenlosen Elektromotors eines Kraftfahrzeugs. Der Elektromotor ist zum Beispiel ein bürstenloser Gleichstrommotor (BLDC). Zweckmäßigerweise ist der Elektromotor ein Synchronmotor. Der bürstenloses Elektromotors ist geeigneterweise ein Bestandteil eines Aggregats des

Kraftfahrzeugs, insbesondere eines Nebenaggregats des Kraftfahrzeugs und beispielsweise eines Verstellantrieb. Bei Betrieb wird mittels des Verstellantriebs ein Verstellteil entlang eines Verstellwegs verbracht. Beispielsweise ist der Verstellantrieb ein elektromotorischer Fensterheber, eine elektromotorisch betriebene Heccklappe oder eine elektromotorisch betriebene Tür, wie eine Schiebetür. Alternativ hierzu ist der Verstellantrieb ein elektromotorisch betriebenes Schiebedach oder ein elektromotorisch betriebenes Verdeck. In einer weiteren Alternative ist das Nebenaggregat eine Pumpe, wie beispielsweise eine Schmiermittelpumpe. Insbesondere ist das Nebenaggregat eine Ölpumpe, beispielsweise eine Motoröl- oder eine Getriebeölpumpe. Zweckmäßigerweise ist das Nebenaggregat eine elektromotorische Lenkunterstützung oder eine ABS- oder ESP-Einheit. In einer weiteren Alternative ist das Nebenaggregat eine elektromotorische Parkbremse oder eine sonstige elektrische Bremse. Zum Beispiel ist das Nebenaggregat ein Bestandteil eines Fahrzeugsitzes und dient insbesondere der Verstellung des Sitzes oder eines Teils des Sitzes, wie einer Lehne oder einer Kopfstütze.

Besonders bevorzugt ist der bürstenlose Elektromotor ein Bestandteil eines elektromotorischen Kältemittelverdichters. Mittels des elektromotorischen Kältemittelverdichters wird bei Betrieb ein Kältemittel komprimiert. Das Kältemittel ist beispielsweise ein chemisches Kältemittel, wie R134a oder R1234yf. Alternativ ist das Kältemittel CO2. Vorzugsweise ist der elektromotorische Kältemittelverdichter derart ausgelegt, dass mittels dessen das jeweilige Kältemittel komprimiert werden kann, wobei beispielsweise eine Druckerhöhung zwischen 5bar und 20bar erfolgt. Insbesondere umfasst der elektromotorische Kältemittelverdichter einen Verdichterkopf, beispielsweise einen Scroll-Verdichter.

Der elektromotorische Kältemittelverdichter ist insbesondere ein Bestandteil eines Kältemittelkreislaufs (Kältekreislauf), der beispielsweise der Klimatisierung eines Innenraums oder der Abkühlung eines Energiespeichers des Kraftfahrzeugs dient, wie einer Hochvoltbatterie. Der Kältemittelkreislauf umfasst ferner insbesondere einen (Klima-)Kondensator, und einen Verdampfer. Der Kondensator ist fluidtechnisch zwischen den elektromotorischen Kältemittelverdichter und den Verdampfer geschaltet. Vorzugsweise umfasst der Kältemittelkreislauf einen weiteren Wärmetauscher, der zwischen den Verdampfer und den elektromotorischen Kältemittelverdichter geschaltet ist, und der vorzugsweise thermisch mit einem weiteren Bauteil des Kraftfahrzeugs kontaktiert ist, wie einer Gebläseleitung einer Klimaanlage oder einem Energiespeicher, wie einem Hochvoltenergiespeicher. Der Kältemittelkreislauf ist insbesondere mit einem Kältemittel befüllt, beispielsweise einem chemischen Kältemittel, wie R134a, R1234yf, oder mit CO2.

Mittels des elektromotorischen Kältemittelverdichters wird bei Betrieb ein Druck des Kältemittels erhöht, welches im Anschluss zu dem Kondensator geleitet wird, der vorzugsweise in thermischem Kontakt mit einer Umgebung des Kraftfahrzeugs ist. Geeigneterweise erfolgt mittels des Kondensators eine Temperaturangleichung des Kältemittels an die Umgebungstemperatur oder zumindest eine Temperaturerniedrigung des Kältemittels. Mit dem nachgeschalteten Verdampfer wird das Kältemittel entspannt, weshalb die Temperatur des Kältemittels weiter verringert wird. In dem nachgeschalteten weiteren Wärmetauscher wird von dem mit dem weiteren Wärmetauscher thermisch kontaktierten Bauteil thermische Energie auf das Kältemittel übertragen, was zu einer Abkühlung des Bauteils und einer Erwärmung des Kältemittels führt. Das erwärmte Kältemittel wird zum Schließen des Kältemittelkreislaufs vorzugsweise erneut dem Kältemittelverdichter zugeführt.

Der Elektromotor weist zwei Teilmotoren auf, die abschnittsweise angeordnet sind. Mit anderen Worten bildet jeder der Teilmotoren einen zusammenhängenden Umfangsabschnitt des Elektromotors. Somit sind die Teilmotoren nicht ineinander versetzt. Die Statoren der jeweiligen Teilmotoren sind abschnittsweise angeordnet, und die Teilmotoren bilden den Stator des Elektromotors. Beispielsweise umfasst der Elektromotor eine Anzahl derartiger Teilmotoren, die den Stator des Elektromotors bilden, wie zum Beispiel drei, vier, fünf oder mehr Teilmotoren. Der Elektromotor weist lediglich einen einzigen Rotor auf, der den (beiden) Teilmotoren zugeordnet ist.

Jeder der Teilmotoren weist n-Phasen auf. Unter n-Phasen wird hierbei insbesondere eine bestimmte Anzahl an Phasen pro Teilmotor verstanden, wobei die Anzahl insbesondere größer oder gleich zwei (2) ist. Beispielsweise ist die Anzahl der Phasen pro Teilmotor kleiner oder gleich zwölf (12) Phasen oder sechs (6) Phasen. Beispielsweise unterscheidet sich die Anzahl der Phasen pro Teilmotor. Mit anderen Worten weist beispielsweise einer der Teilmotoren zwei Phasen und der verbleibende Teilmotor vier Phasen auf. Zusammenfassend bezeichnet n-Phasen lediglich eine Anzahl an Phasen, wobei die Anzahl der Phasen unter den Teilmotoren verschieden sein kann. Mit anderen Worten weist einer der Teilmotoren I-Phasen und der verbleibende Motor m-Phasen auf, wobei insbesondere 2 ≤ m, I ≤ 12 ist. Besonders bevorzugt jedoch weisen die beiden Teilmotoren die gleiche Anzahl an Phasen auf, und insbesondere ist die Anzahl der Phasen pro Teilmotor gleich 3. Mit anderen Worten ist jeder der Teilmotoren ein 3-Phasen-Teilmotor. Beispielsweise weist jede der n-Phasen eine Anzahl an elektrischen Spulen auf, insbesondere zwei, drei, vier oder mehr elektrische Spulen. Mit anderen Worten weist jede der n-Phasen eine Anzahl an Elektromagneten auf.

Die n-Phasen jedes Teilmotors sind beispielsweise in einer Stern- oder einer Dreiecksschaltung miteinander verschaltet. Beispielsweise unterscheidet sich die Verschaltung der beiden Teilmotoren. Besonders bevorzugt jedoch sind die n-Phasen beider Teilmotoren, insbesondere sämtlicher etwaiger Teilmotoren des Elektromotors, in einer Stern-Schaltung miteinander verschaltet. Die beiden Sternpunkte der beiden Teilmotoren weisen zweckmäßigerweise das gleiche elektrische Potential auf. Mit anderen Worten sind sämtliche n-Phasen der Teilmotoren gegen einen gemeinsamen Sternpunkt geführt, der als Potential zum Beispiel Masse aufweist. Beispielsweise korrespondiert jeweils eine der n-Phasen des einen der Teilmotoren zu einer der n-Phasen des anderen Teilmotors. Die korrespondierenden Phasen sind hierbei vorzugsweise symmetrisch, insbesondere mechanisch symmetrisch, zueinander angeordnet, beispielsweise dreh- oder punktsymmetrisch bezüglich einer Drehachse des Elektromotors.

Zum Betrieb des Elektromotors wird ein Umrichter herangezogen, der zur Anzahl der Phasen des Elektromotors korrespondiert. Insbesondere ist der Umrichter ein sogenannter Brückenumrichter mit einer Anzahl an Brückenzweigen, die vorzugsweise zueinander elektrisch parallel geschaltet sind. Bevorzugt ist die Anzahl der Brückenzweige des Umrichters gleich der (Gesamt-)Anzahl der Phasen der Teilmotoren, insbesondere der Anzahl der Phasen des Elektromotors, wobei jeder Brückenzweig bevorzugt zwei Halbleiterschalter aufweist, wie beispielsweise Feldeffekttransistoren (FET), insbesondere MOSFETs. Zumindest jedoch ist die Anzahl der Brückenzweige in einem funktionellen Zusammenhang zur Anzahl der Phasen der Teilmotoren. Sofern jeder Teilmotoren drei Phasen aufweist, umfasst der Umrichter bevorzugt sechs Brückenzweige und ist ein sogenannter B12-Umrichter. Vorzugsweise ist der Umrichter im Montagezustand mit einem Bordnetz des Kraftfahrzeugs elektrisch kontaktiert, und geeigneterweise ist der Umrichter mit einer elektrischen Spannung von wenigen Volt bis zu 1000 Volt betrieben, insbesondere mit einer elektrischen Spannung von 12 Volt, 24 Volt, 48 Volt, 288 Volt, 450 Volt, 470 Volt, 650 Volt oder 830 Volt.

Anhand einer Leistungsanforderung werden Schaltpunkte für die n-Phasen eines der Teilmotoren (erster Teilmotor) bestimmt. Mit anderen Worten werden die Zeitpunkte bestimmt, an denen die den jeweiligen n-Phasen des Teilmotors zugeordneten Halbleiterschalter des Umrichters betätigt werden. Insbesondere wird hierbei die Dauer bestimmt, die eine der n-Phasen des Teilmotors einen elektrischen Stroms führt. Anhand der Leistungsanforderungen werden ferner zweite Schaltpunkte für die n-Phasen des anderen Teilmotors (zweiter Teilmotor) bestimmt.

Die Bestimmung der zweiten Schaltpunkte erfolgt somit im Wesentlichen in entsprechender Weise zur Ermittlung der ersten Schaltpunkte. Hierbei weichen die Schaltpunkte der beiden Teilmotoren aufgrund der unterschiedlichen geometrischen Anordnung der beiden Teilmotoren sowie der Ausgestaltung eines etwaigen Rotors des Elektromotors voneinander ab. Die zweiten Schaltpunkte werden beispielsweise anhand der ersten Schaltpunkte bestimmt/ermittelt. Da zur Bestimmung der ersten Schaltpunkte jedoch die Leistungsanforderung herangezogen wird, sind die zweiten Schaltpunkte somit ebenfalls anhand der Leistungsanforderung bestimmt.

Die zweiten Schaltpunkte werden um einen ersten Phasenwinkel verschoben. Der Phasenwinkel ist hierbei beispielsweise mittels des Rotors oder eines Raumzeigers eines Stroms oder einer Spannung bestimmt und kann beispielsweise Werte zwischen - 180 Grad und + 180 Grad annehmen. Geeigneterweise ist der erste Phasenwinkel zwischen - 90 Grad und + 90 Grad. Vorzugsweise werden sämtliche zweiten Schaltpunkte um den ersten Phasenwinkel verschoben, insbesondere bezüglich zur ursprünglichen Position und/oder bezüglich der ersten Schaltpunkte. In einem weiteren Arbeitsschritt wird der Umrichter anhand der ersten Schaltpunkte und der zweiten Schaltpunkte angesteuert, insbesondere geregelt. Mit anderen Worten werden die Halbleiterschalter des Umrichters entsprechend der ersten und der zweiten Schaltpunkte betätigt, sodass die Phasen der beiden Teilmotoren entsprechend der ersten Schaltpunkte und der verschobenen zweiten Schaltpunkte stromführend bzw. nicht stromführend sind.

Der erste Phasenwinkel ist derart gewählt, dass ein Stromfluss über den Umrichter kleiner als ein erster Grenzwert ist. Insbesondere ist der ersten Phasenwinkel derart gewählt, dass der resultierende Stromfluss über den Umrichter kleiner als der Wert des Stromflusses über den Umrichter ist, wenn die zweiten Schaltpunkte nicht um den ersten Phasenwinkel verschoben sind. Somit ist der erste Grenzwert beispielsweise gleich dem Stromfluss über den Umrichter bei unverschobenen zweiten Schaltpunkten. Mit anderen Worten ist der erste Phasenwinkel derart gewählt, dass bei der Ansteuerung mit den verschobenen zweiten Schaltpunkten sowie den ersten Schaltpunkten der Stromfluss über den Umrichter reduziert ist. Zweckmäßigerweise wird der erste Phasenwinkel derart gewählt, dass der resultierende Stromfluss über den Umrichter ein Minimum darstellt, insbesondere ein globales, zumindest jedoch ein lokales Minimum. Beispielsweise wird ein durchschnittlicher Stromfluss oder ein maximaler Stromfluss reduziert, wobei der maximale Stromfluss beispielsweise von dem Umrichter zu dem Elektromotor oder von dem Elektromotor zu dem Umrichter gerichtet ist. Alternativ wird als Stromfluss eine Schwankung des Stromflusses herangezogen, also eine Abweichung des Stromflusses von einem Mittelwert.

Aufgrund des reduzierten Stromflusses über den Umrichter ist bei der gleichen Leistungsanforderung eine Belastung etwaiger elektrischer und/oder elektronischer Bauteile des Umrichters sowie des Elektromotors reduziert. Somit können vergleichsweise kostengünstige Bauteile herangezogen werden, was Herstellungskosten senkt. Auch ist aufgrund der verringerten Belastung der Bauteile ein Ausfall unwahrscheinlich, weswegen eine Zuverlässigkeit des Elektromotors sowie des Umrichters erhöht ist. Insbesondere weist der Umrichter einen Zwischenkreiskondensator, beispielsweise eine Anzahl derartiger Kondensatoren auf, mittels derer beispielsweise ein Rückstrom von dem Elektromotor zu dem Umrichter gepuffert wird. Aufgrund der Reduzierung des Stromflusses über den Umrichter, also auch eines etwaigen Rückflusses, ist eine aufgrund einer Ladung bzw. Entladung auftretenden Belastung der Zwischenkreiskondensatoren reduziert, was deren Lebensdauer erhöht.

Beispielsweise werden die zweiten Schaltpunkte sämtlicher n-Phasen des anderen Teilmotors um den gleichen ersten Phasenwinkel verschoben. In einer Weiterbildung des Verfahrens wird jeder der n-Phasen des anderen Teilmotors jeweils ein erster Phasenwinkel zugeordnet. Mit anderen Worten werden n Phasenwinkel bestimmt, wobei die Phasenwinkel beispielsweise untereinander unterschiedlich sind. Folglich ist es ermöglicht, den Stromfluss über den Umrichter weiter zu reduzieren, um somit einen verringerten ersten Grenzwert zu wählen. Mit anderen Worten sind zur Verringerung des Stromflusses n-Freiheitsgrade vorhanden.

Zweckmäßigerweise werden die ersten Schaltpunkte für die n-Phasen des einen der Teilmotoren untereinander um einen zweiten Phasenwinkel verschoben. Mit anderen Worten wird jeder der n-Phasen, insbesondere mit Ausnahme einer Phase, die geeigneterweise eine Referenz darstellt, ein zweiter Phasenwinkel zugeordnet. Hierbei ist der zweite Phasenwinkel derart gewählt, dass der resultierende Stromfluss über den Umrichter bei einer Ansteuerung anhand der verschobenen ersten Schaltpunkte und der verschobenen zweiten Schaltpunkte kleiner als ein zweiter Grenzwert ist. Der zweite Grenzwert ist kleiner als der erste Grenzwert. Insbesondere werden sowohl die ersten Schaltpunkte untereinander als auch die zweiten Schaltpunkte untereinander sowie bezüglich der ersten Schaltpunkte verschoben. Folglich steht eine vergleichsweise große Anzahl an Freiheitsgraden zur Reduzierung des Stromflusses zur Verfügung, weswegen der erste Grenzwert bzw. der zweite Grenzwert vergleichsweise gering gewählt werden kann, was eine Belastung des Elektromotors sowie des Umrichters weiter reduziert. Beispielsweise ist ein funktionaler Zusammenhang zwischen dem ersten Phasenwinkel und dem zweiten Phasenwinkel und/oder den ersten Phasenwinkeln und/oder den zweiten Phasenwinkeln untereinander vorhanden, was die Bestimmung der verschobenen ersten und zweiten Schaltpunkte erleichtert.

Beispielsweise werden der erste Phasenwinkel und/oder der zweite Phasenwinkel bzw. die ersten Phasenwinkel bzw. die zweiten Phasenwinkel mittels eines theoretischen Modells ermittelt. Zweckmäßigerweise wird der erste Phasenwinkel anhand eines Kennfelds bestimmt. Hierbei weist beispielsweise der Umrichter das Kennfeld auf. In dem Kennfeld ist zweckmäßigerweise der erste Phasenwinkel in Abhängigkeit der Leistungsanforderung angegeben. Beispielsweise ist der erste Phasenwinkel in Abhängigkeit weiterer Parameter des Umrichters und/oder des Elektromotors hinterlegt, beispielsweise einer Temperatur und /oder einer Drehzahl. Zweckmäßigerweise sind auch der zweite Phasenwinkel bzw. sämtliche erste Phasenwinkel in dem Kennfeld hinterlegt, sofern diese vorhanden sind. Auf diese Weise ist vergleichsweise wenig Berechnungsaufwand beim Betrieb des Elektromotors zur Bestimmung der Phasenwinkel benötigt. Auch ist eine Ermittlung der Phasenwinkel vergleichsweise zeitsparend. Beispielsweise sind bereits die verschobenen zweiten Schaltpunkte in Abhängigkeit der Leistungsanforderung in dem Kennfeld hinterlegt, was einen Berechnungsaufwand weiter reduziert. Alternativ oder in Kombination hierzu sind auch die ersten Schaltpunkte in Abhängigkeit der Leistungsanforderung in dem Kennfeld hinterlegt.

Besonders bevorzugt erfolgt die Bestimmung des ersten Phasenwinkels bzw. der ersten Phasenwinkel und/oder des zweiten bzw. der zweiten Phasenwinkel iterativ. Geeigneterweise wird hierfür wird ein Optimierungsalgorithmus herangezogen. Mit anderen Worten wird zunächst der erste Phasenwinkel verändert und der hierbei resultierende Stromfluss ermittelt. Sofern der resultierende Stromfluss verringert und/oder kleiner als der erste Grenzwert ist, wird der veränderte Winkel beispielsweise als erster Phasenwinkel herangezogen. Geeigneterweise wird solange der Winkel verändert, bis ein Minimum des Stromflusses gefunden ist oder so lange, bis der Stromfluss kleiner als der erste Grenzwert ist. Vorzugsweise wird der erste Phasenwinkel in festen Schritten verändert. Beispielsweise wird der Phasenwinkel um einen Betrag zwischen 5 Grad und 30 Grad, zwischen 10 Grad und 20 Grad und beispielsweise um 15 Grad verändert. Mit anderen Worten wird der Phasenwinkel in 15 Grad-Schritten verändert und der resultierende Stromfluss bestimmt. Auf diese Weise ist ein Minimums nach vergleichsweise wenigen Schritten erreicht. Beispielsweise ist nach ca. 10 Millisekunden das Minimum gefunden, was bei einer Drehzahl von 8000 Umdrehungen pro Minute ca. 10 Umdrehungen des Elektromotors entspricht.

Zusammenfassend werden zunächst die zweiten Schaltpunkte um einen HilfsPhasenwinkel verschoben und der resultierende Stromfluss bestimmt. Falls der Stromfluss verringert ist, werden die zweiten Schaltpunkte wiederum um den Hilfsphasenwinkel verschoben. Dies erfolgt so lange, bis ein Anstieg des Stromflusses ermittelt ist. In diesen Fall wird die letzte Verschiebung rückgängig gemacht und diese zweiten Schaltpunkte zur Ansteuerung des Umrichters herangezogen. Folglich entspricht der erste Phasenwinkel einem ganzzahligen Vielfachen des Hilfsphasenwinkels. Sofern der Stromfluss bei der ersten Verschiebung erhöht ist, werden die zweiten Schaltpunkte bevorzugt in die andere Richtung um jeweils den Hilfsphasenwinkel so lange verschoben, bis wiederum ein Anstieg des Stromflusses erfasst wird.

Zweckmäßigerweise wird der erste Phasenwinkel erneut bestimmt, wenn die Leistungsanforderung geändert wird. Somit wird für jede Leistungsanforderung ein erster Phasenwinkel ermittelt, sodass bei jeder Leistungsanforderung der Stromfluss jeweils kleiner als der erste Grenzwert ist. Hierbei ist beispielsweise jeder Leistungsanforderung ein erster Grenzwert zugeordnet. Alternativ hierzu ist der erste Grenzwert konstant oder zumindest unabhängig von der Leistungsanforderung. Beispielsweise ist der erste Grenzwert in dem Kennfeld hinterlegt, falls dieses verwendet wird. Als eine Alternative hierzu ist ein weiteres Kennfeld vorhanden, mittels dessen der erste Grenzwert ermittelt wird.

Beispielsweise entsprechen die unverschobenen zweiten Schaltpunkte den phasenversetzten ersten Schaltpunkten. Hierbei sind die unverschobenen zweiten Schaltpunkte beispielsweise um 180 Grad bezüglich der ersten Schaltpunkte versetzt. Der Winkel ist beispielsweise elektrisch oder mechanisch bestimmt. Auf diese Weise können die zweiten Schaltpunkte vergleichsweise zeitsparend bestimmt werden. Hierfür sind die beiden Teilmotoren zweckmäßigerweise geeignet zueinander positioniert. In einer Alternative hierzu entsprechen die unverschobenen zweiten Schaltpunkte den invertierten und phasenversetzten ersten Schaltpunkten. Mit anderen Worten entspricht ein Einschalten einer der Phasen des einen der Teilmotoren dem Abschalten der korrespondieren Phase des anderen Teilmotors und umgekehrt. Die Schaltpunkte sind zweckmäßigerweise derart zueinander phasenversetzt, dass eine Symmetrieachse zwischen zwei zeitlich benachbarten Schaltpunkten jeder der Phasen des einen der Teilmotoren um insbesondere 180 Grad bezüglich der Symmetrieachse der korrespondierenden Schaltpunkte des anderen Teilmotors versetzt sind. Hierfür sind die n-Phasen des anderen Teilmotors zweckmäßigerweise elektrisch um 180 Grad gegenüber der n-Phasen des einen der Teilmotoren gedreht. Aufgrund dessen müssen somit lediglich die n-Phasen des einen der Teilmotoren anhand der Leistungsanforderung berechnet werden, und die zweiten Schaltpunkte können anhand der ersten Schaltpunkte bestimmt werden, wobei diese zu der Leistungsanforderung korrespondieren.

Beispielsweise werden die ersten Schaltpunkte verworfen wenn ein Fehler bei dem einen der Teilmotoren bestimmt wird. Mit anderen Worten werden die ersten Schaltpunkte gelöscht, wenn der Fehler bei dem einen der Teilmotoren erfasst ist. Somit wird der eine der Teilmotoren nicht weiter angesteuert, sofern ein Fehler bei diesem erkannt ist, sodass eine Vergrößerung des Fehlers oder eine Beschädigung weiterer Komponenten des Elektromotors und/oder des Umrichters im Wesentlichen ausgeschlossen ist. Der Umrichter wird somit anhand lediglich der zweiten Schaltpunkte angesteuert. Aufgrund dessen ist zwar die Leistung des Elektromotors reduziert, es kann jedoch ein Betrieb aufrechterhalten werden. Insbesondere sofern der Elektromotor ein Bestandteil eines elektromotorischen Kältemittelverdichters ist, ist vergleichsweise selten eine Maximalleistung erforderlich. Aufgrund des Teilbetriebs mittels des anderen Teilmotors ist jedoch auch weiterhin eine, wenn auch begrenzte, Kühlleistung vorhanden, sodass das Kraftfahrzeug auch weiterhin betrieben werden kann. Beispielsweise werden die zweiten Schaltpunkte erneut ermittelt, wobei berücksichtigt ist, dass der eine der Teilmotoren nicht betrieben wird. Folglich wird der Elektromotor lediglich mittels des anderen Teilmotors mit der Leistungsanforderung betrieben.

Alternativ werden die zweiten Schaltpunkte verworfen / gelöscht, wenn ein Fehler bei dem anderen Teilmotor bestimmt /erfasst wird. Somit wird der Umrichter bzw. der Elektromotor lediglich anhand der ersten Schaltpunkte betrieben und der andere Teilmotor ist im Wesentlichen stillgesetzt. Insbesondere werden die ersten Schaltpunkte erneut ermittelt, wobei berücksichtigt ist, dass der andere Teilmotor nicht betrieben wird. Folglich ist ein Notlaufprogramm vorhanden, weswegen eine Zuverlässigkeit der elektrischen Maschine erhöht ist. Geeigneterweise wird der Umrichter bei einem Löschen der Schaltpunkte derart angesteuert, dass die n-Phasen des den Fehler aufweisenden Teilmotors nicht stromführend sind.

Das Aggregat ist ein Bestandteil eines Kraftfahrzeugs und dient beispielsweise dem Antrieb des Kraftfahrzeugs und ist somit ein Hauptaggregat des Kraftfahrzeugs. Besonders bevorzugt ist jedoch das Aggregat ein Nebenaggregat des Kraftfahrzeugs, wie ein elektromotorisches Verstellantrieb oder ein sonstiger elektrischer Antrieb. Geeigneterweise ist der elektromotorischer Verstellantrieb eine elektromotorisch betriebene Tür wie eine Schiebetür. Alternativ ist der Verstellantrieb ein elektromotorischer Fensterheber, ein elektromotorisch betriebenes Schiebedach oder ein elektromotorisch betriebenes Verdeck. In einer weiteren Alternative ist das Nebenaggregat eine Schmiermittel-/ oder Wasserpumpe. Besonders bevorzugt ist das Aggregat ein elektromotorischer Kältemittelverdichter, mittels dessen bei Betrieb ein Kältemittel verdichtet wird. Hierfür umfasst der elektromotorische Kältemittelverdichter zweckmäßigerweise einen Verdichterkopf, wie einen Scrollverdichterkopf. Das Aggregat umfasst einen bürstenlosten Elektromotor mit zwei abschnittsweise angeordneten Teilmotoren. Die Teilmotoren bilden insbesondere einen Stator des Elektromotors. Zweckmäßigerweise umfassen die Teilmotoren keinen separaten Rotor und sind folglich rotorlos. Der Elektromotor umfasst hierbei vorzugsweise einen einzigen Rotor, der den beiden Teilmotoren zugeordnet ist.

Jeder der Teilmotoren umfasst jeweils n-Phasen, wobei die Anzahl der n-Phasen der beiden Teilmotoren beispielsweise unterschiedlich oder bevorzugt gleich ist. Das Aggregat weist ferner einen zur Anzahl der n-Phasen des Elektromotors korrespondierenden Umrichter auf. Insbesondere ist der Umrichter ein Brückenumrichter, und die Anzahl der Brückenzweige des Umrichters ist gleich der Gesamtanzahl der n-Phasen des Elektromotors. Zum Betrieb werden zunächst anhand einer Leistungsanforderung erste Schaltpunkte für die n-Phasen eines der Teilmotoren bestimmt und anhand der Leistungsanforderung werden zweite Schaltpunkte für die n-Phasen des anderen Teilmotors bestimmt. Die zweiten Schaltpunkte werden um einen ersten Phasenwinkel verschoben, und der Umrichter wird anhand der ersten Schaltpunkte und der zweiten Schaltpunkte angesteuert, wobei der erste Phasenwinkel derart gewählt wird, dass ein resultierender Stromfluss über den Umrichter kleiner als ein erster Grenzwert ist.

Die im Zusammenhang mit dem Verfahren beschriebenen Weiterbildungen und Vorteile sind sinngemäß auch auf das Aggregat zu übertragen und umgekehrt.

Nachfolgend wird die Erfindung anhand einer Zeichnung näher erläutert. Darin zeigen:
- Fig. 1: schematisch ein Kraftfahrzeug mit einem elektromotorischen Kältemittelverdichter,
- Fig. 2: in einer Schnittdarstellung schematisch vereinfacht den elektromotorischen Kältemittelverdichter,
- Fig. 3: schematisch den elektromotorischen Kältemittelverdichter mit einem Umrichter und zwei Teilmotoren,
- Fig. 4: in einer Schnittdarstellung den bürstenlosen Elektromotor,
- Fig. 5: ein Verfahren zum Betrieb des bürstenlosen Elektromotors,

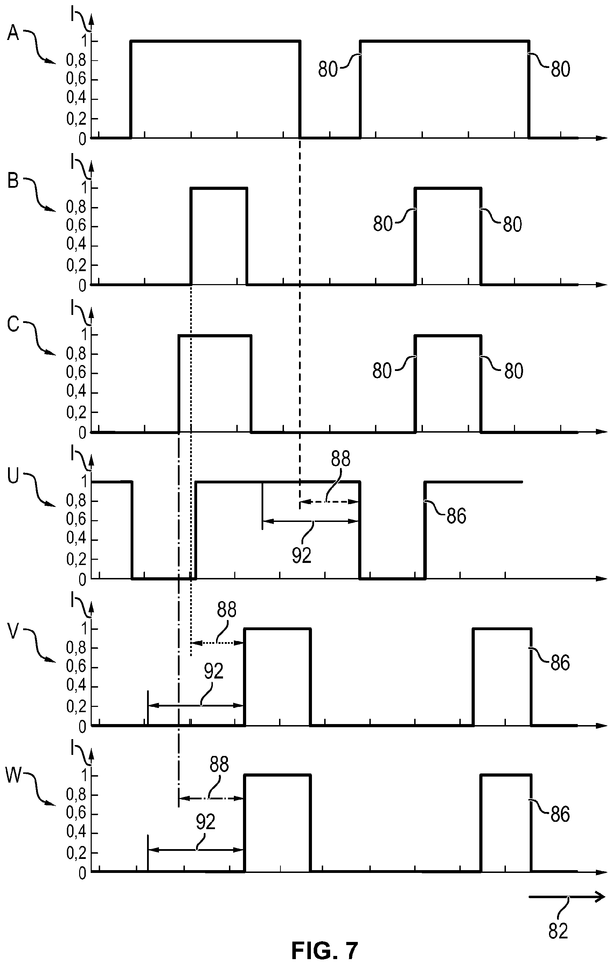

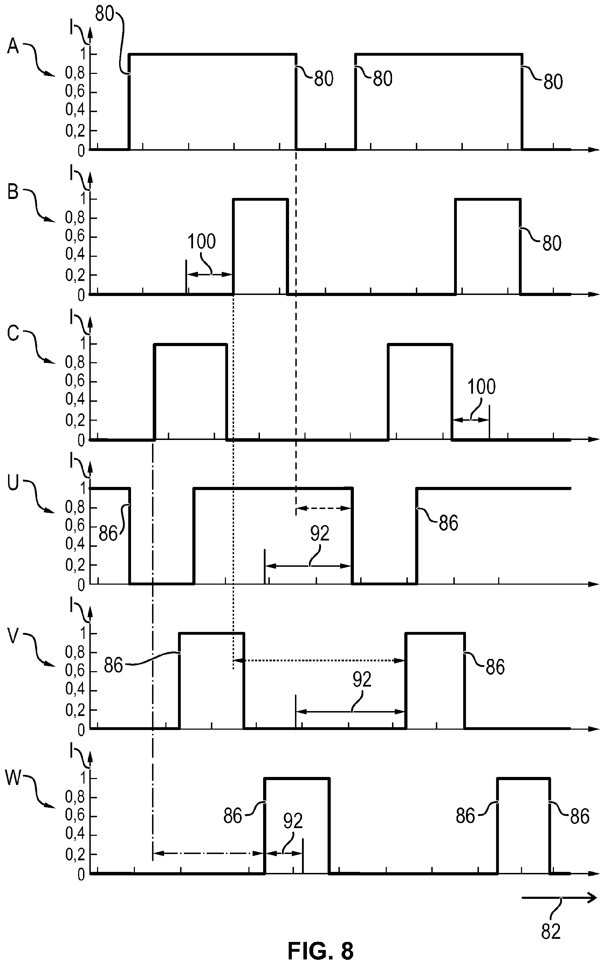

- Fig. 6 - 9: Schaltpunkte für Phasen des bürstenlosen Elektromotors,
- Fig. 10: einen resultierender Stromfluss über den Umrichter bei einer Leistungsanforderung,
- Fig. 11: resultierende Stromflüsse gemäß Fig. 10 bei unterschiedlichen Leistungsanforderungen, und
- Fig. 12: eine Weiterbildung des Verfahrens gemäß Fig. 5.

Einander entsprechende Teile sind in allen Figuren mit den gleichen Bezugszeichen versehen.

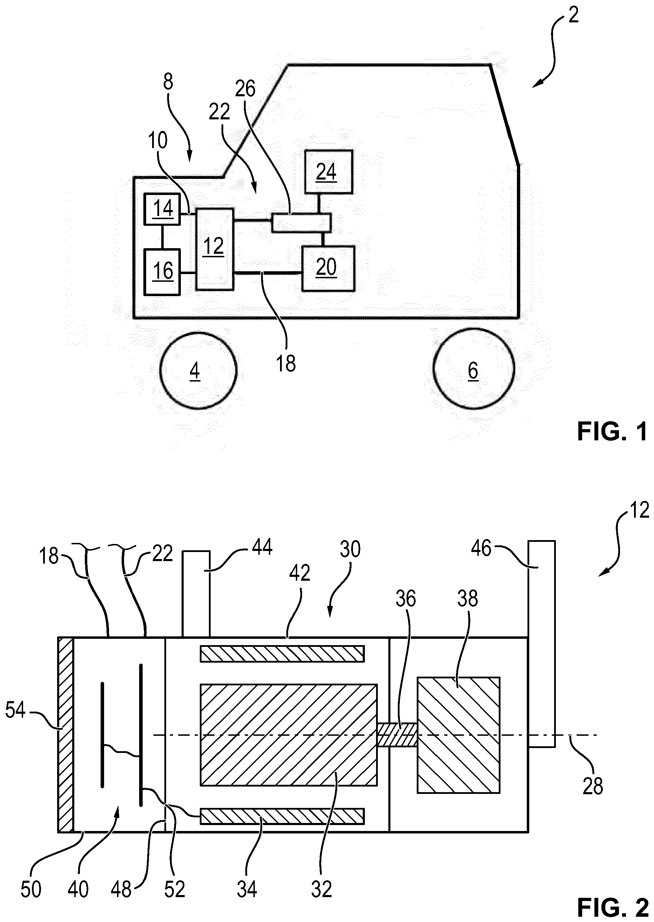

In Fig. 1 ist schematisch vereinfacht ein Kraftfahrzeug 2 mit zwei Vorderrädern 4 und zwei Hinterrädern 6 dargestellt. Zumindest zwei der Räder 4, 6 sind mittels eines nicht näher gezeigten Hauptantriebs angetrieben, beispielsweise einer Verbrennungskraftmaschine, einem Elektromotor oder einer Kombination hieraus. Das Kraftfahrzeug 2 umfasst einen Kältemittelkreislauf 8, der ein Bestandteil einer Klimaanlage ist. Der Kältemittelkreislauf 8 ist mit einem Kältemittel 10 befüllt, beispielsweise CO2, R1234yf oder R134a. Mittels eines elektromotorischen Kältemittelverdichters (eKMV) 12 wird das Kältemittel 10 verdichtet und einem fluidtechnisch nachgeschalteten Kondensator 14 zugeführt, der mit Umgebungsluft beaufschlagt ist, was zu einer Temperaturabsenkung des Kältemittels 10 führt. Der Druck und somit die Temperatur des Kältemittel 10 wird mittels eines nachgeschalteten Verdampfers 16 erniedrigt, der einen nicht näher dargestellten weiteren Wärmtauscher umfasst, der mit einer Gebläseleitung der Klimaanlage thermisch gekoppelt ist. Die Gebläseleitung fördert in Abhängigkeit einer Benutzereinstellung gekühlte Luft in einen Innenraum des Kraftfahrzeugs 2.

Der elektromotorische Kältemittelverdichter 12 ist mittels eines Bus-Systems 18, das ein CAN-Bus-System oder ein Lin-Bus-System ist, signaltechnisch mit einer Kraftfahrzeugsteuerung 20 gekoppelt, wie einem Bordcomputer. Mittels eines Bordnetzes 22, welches die jeweilige elektrische Spannung, beispielsweise 48V, führt und mittels einer Batterie 24 gespeist ist, wird der elektromotorische Kältemittelverdichter 12 bestromt. Das Bordnetz 22 umfasst ferner eine Sicherungseinrichtung 26, mittels derer ein elektrischer Stromfluss zwischen der Batterie 24 und dem Kältemittelverdichter 12 unterbunden werden kann. Hierfür weist die Sicherungseinrichtung 26 beispielsweise einen Last- und/oder Schutzschalter auf. Die Sicherungseinrichtung 26 ist mittels des Bus-Systems 18 oder anderweitig signaltechnisch mit der Kraftfahrzeugsteuerung 20 verbunden, sodass mittels der Kraftfahrzeugsteuerung 20 der Last- bzw. Schutzschalter betätigt und somit der elektrische Stromfluss unterbunden werden kann.

Fig. 2 zeigt schematisch vereinfacht den elektromotorischen Kältemittelverdichter 12 in einer Schnittdarstellung entlang einer Drehachse 28 eines bürstenlosen Elektromotors 30 des Kältemittelverdichters 12. Der (bürstenlose) Elektromotor 30 weist einen zylindrischen Rotor 32 auf, der umfangsseitig mittels eines hohlzylindrischen Stators 34 umgeben ist. Der Rotor 32 ist mittels einer Welle 36 drehbar um die Drehachse 28 gelagert. An der Welle 36 ist freiendseitig ein Verdichterkopf 38 drehfest angebunden, beispielsweise ein Scrollverdichter. Der Elektromotor 30 wird mittels einer Elektronik 40 bestromt, die mit dem Bus-Systems 18 und dem Bordnetz 22 verbunden ist.

Der Elektromotor 30, der Verdichterkopf 38 und die Elektronik 40 sind in einem Gehäuse 42 aus einem Aluminiumdruckguss angeordnet, das eine im Wesentlichen hohlzylindrische Form aufweist und konzentrisch zur Drehachse 28 ist. Das Gehäuse 42 umfasst einen Zulauf 44 über den das Kältemittel 10 in das Gehäuse 42 eintritt und entlang des Elektromotors 30 zu dem Verdichterkopf 38 gesaugt wird, mittels dessen eine Druckerhöhung erfolgt. Das mittels des Verdichterkopfs 38 komprimierte Kältemittel 10 wird mittels eines Ablaufs 46 aus dem Gehäuse 34 befördert.

Das Gehäuse 42 umfasst eine Trennwand 48, mittels dessen ein Elektronikgehäuse 50 von dem von dem Kältemittel 10 durchströmten Teil des Gehäuses 42 abgetrennt ist. Innerhalb des Elektronikgehäuses 50 ist die Elektronik 40 angeordnet. Die Trennwand 48 weist eine Durchkontaktierung 52 auf, die druckdicht ist, und über die die Bestromung des Stators 34 erfolgt. Auf der der Trennwand 48 in axialer Richtung, also parallel zur Drehachse 28, gegenüberliegenden Seite umfasst das Elektronikgehäuse 50 einen aus einem Metall gefertigten Gehäusedeckel 54, der mittels Schrauben an weiteren Bestandteilen des Elektronikgehäuses 50 lösbar befestigt ist, und welcher eine Öffnung des Elektronikgehäuses 50 verschließt.

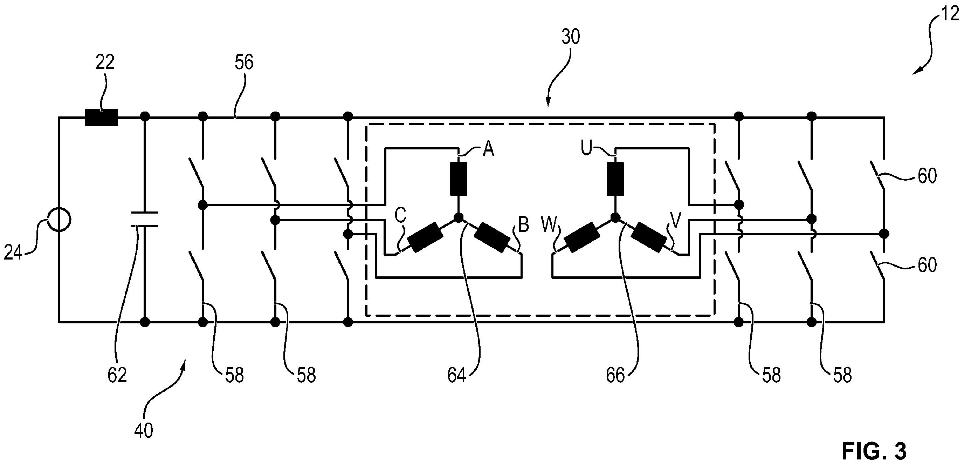

In Fig. 3 ist der elektromotorische Kältemittelverdichter 12 schematisch gezeigt. Die Elektronik 40 weist einen Umrichter 56 mit sechs zueinander parallel geschalteten Brückenzweigen 58 auf, die jeweils zwei Halbleiterschalter 60 umfassen. Der Umrichter 56 ist somit ein B12-Umrichter. Zu den Brückenzweigen 58 ist ein Zwischenkreiskondensator 62 parallel geschaltet. Der Umrichter 56 ist mittels des Bordnetzes 22 mit der Batterie 24 elektrisch kontaktiert, sodass an dem Zwischenkreiskondensator 62 die elektrische Spannung der Batterie 24 anliegt. Der Elektromotor 30 weist zwei Teilmotoren 64, 66 auf. Hierbei weist einer der Teilmotoren 64 (erster Teilmotor) drei Phasen A, B, C, auf. Der andere Teilmotor 66 (zweiter Teilmotor) weist ebenfalls drei Phasen U, V, W auf. Folglich weist der Elektromotor 30 genau so viele Phasen A, B, C, U, V, W auf, wie der Umrichter 56 Brückenzweige 58 umfasst. Die Phasen A, B, C, U, V, W der beiden Teilmotoren 64, 66 sind jeweils in einer Sternschaltung miteinander elektrisch kontaktiert, wobei die beiden Sternpunkte der beiden Teilmotoren 64, 66 auf dem gleichen elektrischen Potential liegen.

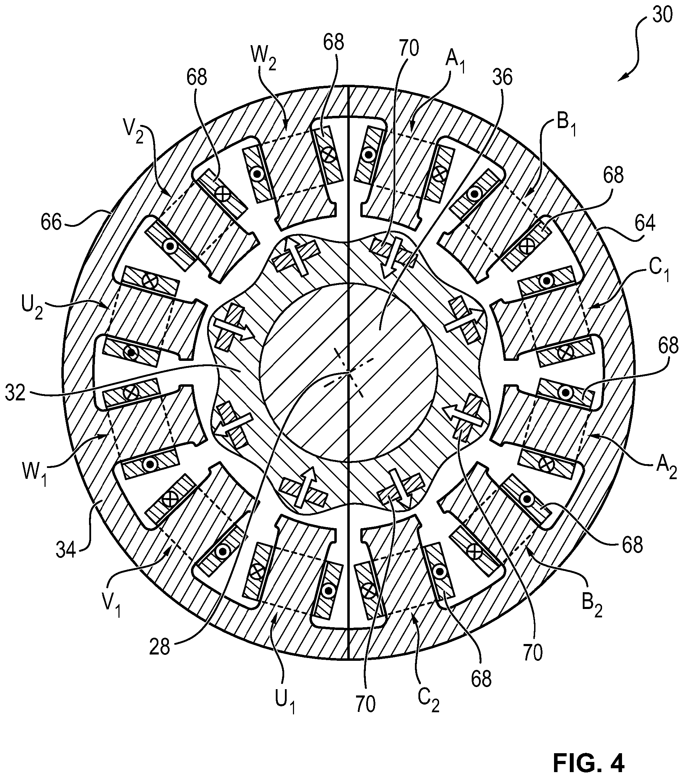

In Figur 4 ist der Elektromotor 30 in einer Schnittdarstellung senkrecht zur Drehachse 28 gezeigt. Die beiden Teilmotoren 64, 66 bilden im Wesentlichen den Stator 34 und sind abschnittsweise angeordnet. Folglich ist jeder der Teilmotoren 64, 66 im Wesentlichen halbmondförmig ausgestaltet, und jeweils im Wesentlichen 180 Grad des Umfangs des Rotors 32 sind zusammenhängend entweder von dem ersten oder dem zweiten Teilmotor 64, 66 umfangsseitig umgeben. Jede der Phasen A, B, C, U, V, W weist jeweils zwei elektrische Spulen 68 auf, die zueinander um 90 Grad bezüglich der Drehachse 28 versetzt sind. Infolgedessen ist eine Kopplung zwischen einer der Spulen 68 des zweiten Teilmotors 66, nämlich W2 und einer der Spulen einer der Phasen des ersten Teilmotors 64, nämlich A1 sowie der Spule U1 und C2 im Vergleich zu den sonstigen Kopplungen verändert, weswegen der Elektromotor 30 keinen drehsymmetrischen Aufbau mit einem Drehwinkel von 90 Grad aufweist. Zusammenfassend weist der Elektromotor 30 insgesamt zwölf elektrische Spulen 68 auf, von denen jeweils sechs jedem der Teilmotoren 64, 66 zugeordnet sind. Hierbei sind jeweils zwei elektrische Spulen 68 jeder der Phasen A, B, C, U, V, W des jeweiligen Teilmotors 64, 66 zugeordnet, und die einander zugeordneten elektrischen Spulen 68 sind zueinander jeweils um 90 Grad bezüglich der Drehachse 28 versetzt. Der Rotor 32 umfasst acht Permanentmagneten 70, die radial magnetisiert sind, wobei die Magnetisierungsrichtung zwischen benachbarten Permanentmagneten 70 unterschiedlich ist.

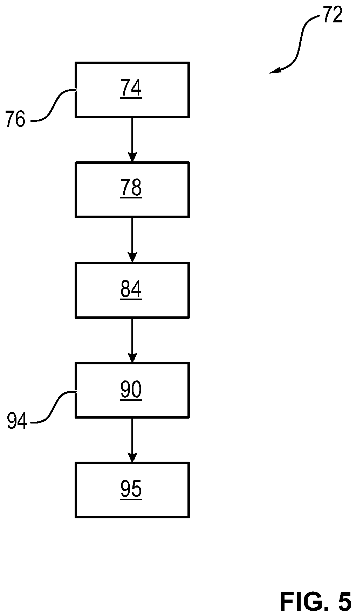

In Fig. 5 ist ein Verfahren 72 zum Betrieb des Elektromotors 30 mittels des Umrichters 56 gezeigt. In einem ersten Arbeitsschritt 74 wird eine Leistungsanforderung 76 an den Elektromotor 30 bestimmt. Die Leistungsanforderung 76 wird beispielsweise mittels der Kraftfahrzeugsteuerung 20 bereitgestellt. In einem zweiten Arbeitsschritt 78, der beispielsweise zeitglich zu dem ersten Arbeitsschritt 74 erfolgt, werden erste Schaltpunkte 80 für die drei Phasen A, B, C des ersten Teilmotors 64 anhand der Leistungsanforderung 76 bestimmt. Die ersten Schaltpunkte 80 entsprechen hierbei den Ansteuerungen der Halbleiterschalter 60 der Brückenzweige 58 des Umrichters 56, die mit den drei Phasen A, B, C des ersten Elektromotors 64 elektrisch kontaktiert sind. Bei jedem der Schaltpunkte 80 wird der Schaltzustand mindestens eines der Halbleiterschalter 60 verändert, sodass zwischen benachbarten ersten Schaltpunkten 80 jeder der Phasen A, B, C entweder ein Stromfluss durch die jeweilige Phase A, B, C erfolgt oder unterbunden ist.

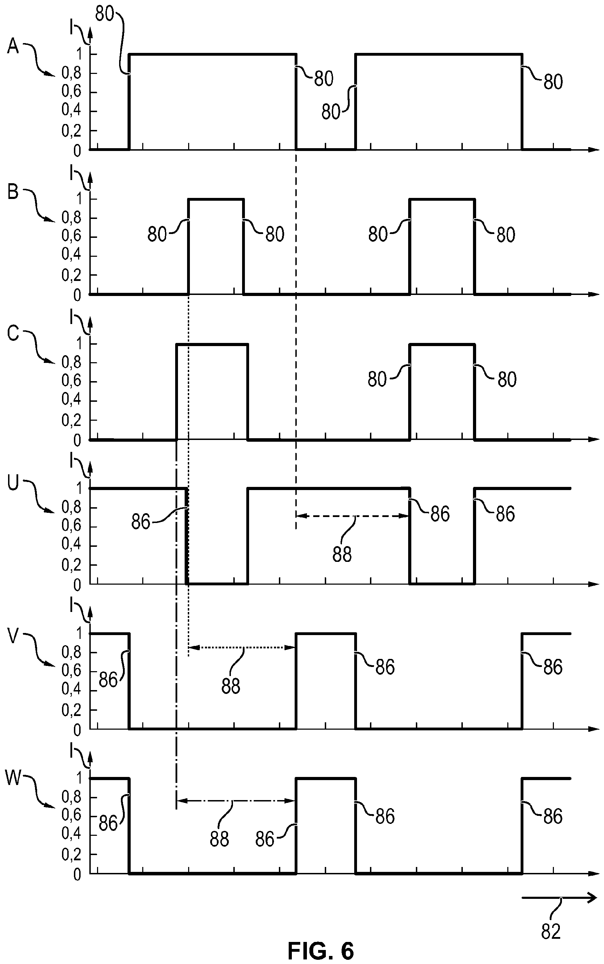

In Fig. 6 ist dies beispielhaft dargestellt, wobei die ersten Schaltpunkten 80 in Abhängigkeit eines Ansteuerwinkels 82 gezeigt sind, der beispielsweise die Position des Rotors 32 bezüglich des Stators 64 oder den Winkel zwischen einem Stromraumzeiger und dem Stator 34 bezeichnet. Die drei Phasen A, B, C sind hierbei untereinander dargestellt und jede der drei Phasen A, B, C kann zwei Zustände annehmen, nämlich einmal den stromführenden oder den nicht stromführenden Zustand, wobei die beiden Zustände jeweils mittels eines der ersten Schaltpunkte 80 voneinander getrennt sind. Hierbei symbolisiert beispielsweise der obere Zustand die Stromführung und der untere Zustand den gegen einen Stromfluss gesperrten Zustand der jeweiligen Phase A, B, C.

In einem dritten Arbeitsschritt 84 werden anhand der Leistungsforderung 76 zweite Schaltpunkte 86 für die Phasen U, V, W des zweiten Teilmotors 66 bestimmt, die ebenfalls in Fig. 6 gezeigt sind. Hierbei korrespondiert die Phase U zur Phase A, die Phase V zur Phase B und die Phase B zur Phase C der beiden Teilmotoren 64, 66. Mit anderen Worten korrespondieren spiegelbildlich zur Drehachse 28 angeordnete Phasen A, B, C, U, V, W zueinander. Die zweiten Schaltpunkte 86 korrespondieren zu den um einen Verschiebewinkel 88 versetzten ersten Schaltpunkten 80. Der Verschiebewinkel 88 beträgt hierbei 180 Grad, sodass die um den mechanischen Winkel bezüglich der Drehachse 28 zueinander versetzten Phasen A, B, C, U, V, W zueinander ebenfalls elektrisch um den Verschiebewinkel 88, nämlich 180 Grad, versetzt sind.

In einem vierten Arbeitsschritt 90 werden die zweiten Schaltpunkte 86 um einen ersten Phasenwinkel 92 verschoben. Infolgedessen ist der Verschiebewinkel 88 zwischen den ersten Schaltpunkten 80 und den zweiten Schaltpunkten 86 verändert und beispielsweise verringert auf zum Beispiel 100 Grad. Der erste Phasenwinkel 92 wird insbesondere anhand eines Kennfelds 94 bestimmt, welches zweckmäßigerweise in einem Speicher der Elektronik 40 hinterlegt ist. Das Kennfeld 94 wird beispielsweise bei Fertigung des elektromotorischen Kältemittelverdichters 12 auf einen Prüfstand ermittelt oder mittels eines theoretischen Modells erstellt. In einem nachfolgenden fünften Arbeitsschritt 95 wird der Umrichter 56 anhand der ersten Schaltpunkte 80 sowie der (verschobenen) zweiten Schaltpunkte 86 angesteuert, also die Halbleiterschalter 60 entsprechend der Schaltpunkte 80, 86 betätigt.

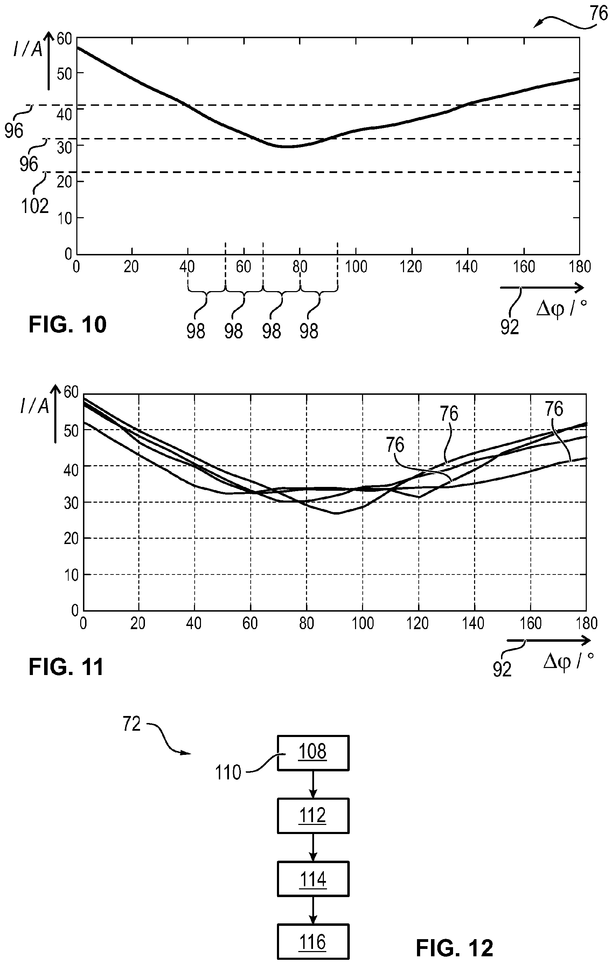

Der erste Phasenwinkel 92 wird derart gewählt, dass ein resultierender Stromfluss I über den Umrichter 56 kleiner als ein erster Grenzwert 96 ist, der in Fig. 10 dargestellt, ist. Hierbei ist der Stromfluss I über den Umrichter 56 in Abhängigkeit des ersten Phasenwinkels 92 bei der Leistungsanforderung 76 dargestellt. Beispielsweise ist der erste Grenzwert 96 auf einen Wert knapp über der willkürlichen Einheit 40 festgelegt. Infolgedessen werden sämtliche Bauteile der Elektronik 40 lediglich höchstens mit diesem willkürlichen Werts belastet, weswegen darauf angepasste Bauteile herangezogen werden können, was Herstellungskosten spart. In einer Alternative hierzu wird der erste Grenzwert 96 knapp über dem Minimum gewählt, sodass bei der Ansteuerung des Umrichters 56 lediglich ein Minimum des Stromflusses I über den Umrichter 56 erfolgt.

Anstatt des Kennfelds 94 wird der erste Phasenwinkel 92 in einer weiteren Alternative iterativ bestimmt. Hierbei wird der erste Phasenwinkel 92 beispielsweise in festen Schritten 98 von insbesondere 15 Grad verändert. So wird zum Beispiel startend bei einem willkürlichen Winkel von 35 Grad, der Winkel um den Schritt 98 auf 50 Grad erhöht und der resultierende Stromfluss I ermittelt. Da dieser kleiner ist, wird der Winkel erneut um den Schritt 98 auf 65 Grad vergrößert. Der resultierende Stromfluss I ist kleiner als der Grenzwert 96, sodass dieser Winkel als erster Phasenwinkel 92 herangezogen wird.

In einer abgewandelten Variante des Verfahrens werden in dem vierten Arbeitsschritt 90 jeder der Phasen U, V, W des zweiten Teilmotors 66 jeweils ein erster Phasenwinkel 92 zugeordnet, sodass die zweiten Schaltpunkte 86 auch zueinander verschoben sind. Alternativ oder in Kombination hierzu werden ebenfalls die Phasen A, B, C des ersten Teilmotors 64 untereinander um einen zweiten Phasenwinkel 100 verschoben. Hierbei werden beispielsweise die ersten Schaltpunkte 80 einer der ersten Phasen A des ersten Teilmotors 64 unverändert belassen, und die weiteren Phasen B, C, des ersten Teilmotors 64 um den zweiten Phasenwinkel 100 verschoben. Zweckmäßigerweise wird jeder der zu verschiebenden Phasen B, C ein unterschiedlicher zweiter Phasenwinkel 100 zugeordnet. Der zweite Phasenwinkel 100 ist hierbei derart gewählt, dass der resultierende Stromfluss I über den Umrichter 56 kleiner als ein zweiter Grenzwert 102 ist, der insbesondere kleiner als der erste Grenzwert 96 ist. Aufgrund des zweiten Phasenwinkels 100 kann der Stromfluss I weiter reduziert werden, sodass auch der in Fig. 10 gezeigte zweite Grenzwert 102 mittels des Stromflusses I bei der gleichen Leistungsanforderung 76 unterschritten wird.

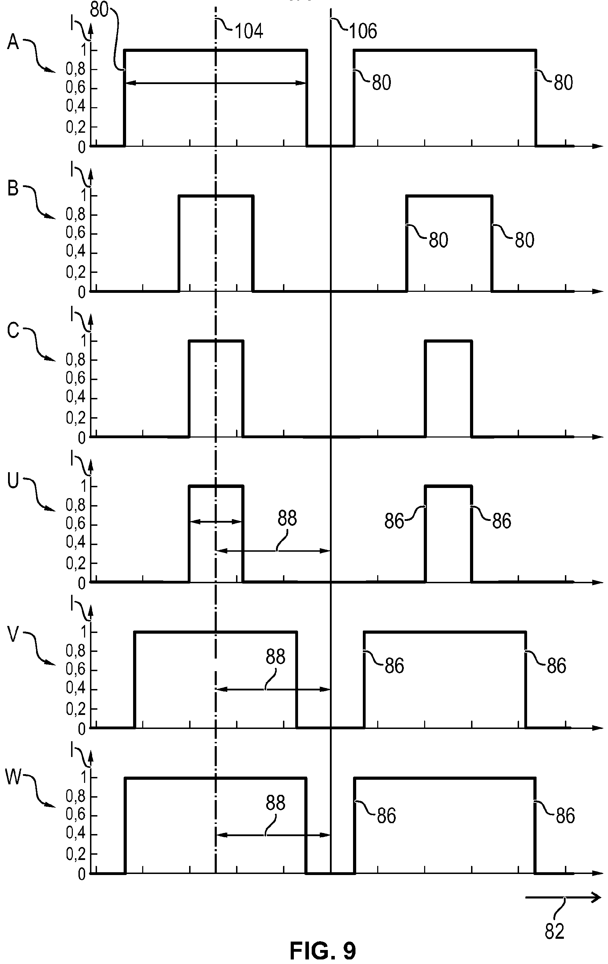

In Fig. 9 sind in die (unverschobenen) ersten Schaltpunkte 80 sowie die (unverschobenen) zweiten Schaltpunkte 86 für einen abgeänderten Elektromotor 30 gezeigt. In diesem Fall sind die einzelnen Spulen 68 der beiden Teilmotoren 64, 66 nicht gleichgewickelt, sondern um 180 Grad gedreht gewickelt. Die zweiten Schaltpunkte 86 entsprechen den invertierten ersten Schaltpunkten 80, die phasenversetzt sind. Die Phasenversetzung ist derart, dass die Mittelpunkte der Zeitintervalle der Stromführung sämtlicher Phasen A, B, C, U, V, W zu einem ersten Symmetriewinkel 104 erfolgen, und dass sämtliche Mittelpunkte der Intervalle keiner Stromführung zu einem zweiten Symmetriewinkel 106 erfolgen. Die beiden Symmetriewinkel 104, 106 sind um den Verschiebewinkel 88 von 180 Grad verschoben. Beim vierten Arbeitsschritt 90 wird der erste Symmetriewinkel 104 sowie der zweite Symmetriewinkel 106 der jeweiligen Phasen B, C, U, V, W verschoben.

Wenn die Leistungsanforderung 76 geändert wird, wird wiederum der zweite, dritte, vierte und fünfte Arbeitsschritt 78, 84, 90, 95 ausgeführt. Mit anderen Worten wird der erste Phasenwinkel 92 erneut bestimmt. In Fig. 11 sind die sich bei unterschiedlichen Leistungsanforderungen 76 ergebenden Stromflüsse I über den Umrichter 56 gezeigt. Das Minimum ist je nach Leistungsanforderung 76 unterschiedlich, weswegen ein hierauf angepasster erster Grenzwert 96 unterschiedlich gewählt werden kann.

In Fig. 12 ist eine Weiterbildung des Verfahrens 72 dargestellt. In einem sechsten Arbeitsschritt 108, der im Wesentlichen unabhängig von dem ersten, zweiten, dritten, vierten und fünften Arbeitsschritt 74, 78, 84, 90, 95 erfolgt, wird ein Fehler 110 bei dem ersten Teilmotor oder bei dem zweiten Teilmotor 66 bestimmt. Der Fehler 110 entspricht beispielsweise einem Kurzschluss einer der Phasen A, B, C, U, V, W des ersten bzw. des zweiten Teilmotors 64, 66. In einem sich anschließenden siebten Arbeitsschritt 112 werden die ersten Schaltpunkte 80 verworfen, wenn der Fehler 110 den ersten Teilmotor 64 betrifft. Wenn der Fehler 110 den zweiten Teilmotor 66 betrifft, werden hingegen die zweiten Schaltpunkte 86 verworfen. Mit anderen Worten werden die jeweiligen Schaltpunkte 80, 86 gelöscht.

In einem sich anschließenden achten Arbeitsschritt 114 wird der Umrichter 56 entweder lediglich mittels der ersten Schaltpunkte 80 oder mittels der zweiten Schaltpunkte 86 angesteuert, sodass der Teilmotor 64, 66, bei dem der Fehler 110 erfasst wurde, nicht angesteuert wird. Hierbei sind die Halbleiterschalter 60, die diesem Teilmotor 64, 66 zugeordnet sind, gesperrt, sodass über diesen kein Stromfluss I stattfindet. Infolgedessen ist zwar eine maximale Leistung des Elektromotors 30 reduziert, jedoch ist ein Notlaufprogramm vorhanden. In einer weiteren Alternative werden zusätzlich zum Löschen der zweiten Schaltpunkte 86 die ersten Schaltpunkte 80 angepasst, sodass mittels des Elektromotors 30 bei Betrieb lediglich des ersten Teilmotors 64 dennoch die Leistungsanforderung 76 erfüllt werden kann, sofern der Fehler 110 bei dem zweiten Teilmotor 66 vorliegt. Falls der Fehler 110 bei dem ersten Teilmotor 64 vorliegt, werden in dieser Alternative die ersten Schaltpunkte 80 gelöscht. Ferner werden die zweiten Schaltpunkte 86 darauf angepasst, dass mittels des zweiten Teilmotors 66 die Leistungsanforderung 76 erfüllt wird.

In einem anschließenden neunten Arbeitsschritt 116 wird innerhalb eines Speichers der Elektronik 40 der Fehler 110 gespeichert oder dieser über das Bus-System 18 an die Kraftfahrzeugsteuerung 20 übermittelt. Hierbei wird beispielsweise mittels einer Signalleuchte dem Führer des Kraftfahrzeugs 20 der Ausfall eines der Teilmotoren 64, 66 angezeigt. In einer Alternative wird der Fehler 110 lediglich in einem Speicher der Kraftfahrzeugsteuerung 20 hinterlegt, sodass bei einer anstehenden Wartung in einer Werkstatt der Fehler 110 ausgelesen werden kann.

### Bezugszeichenliste

- 2: Kraftfahrzeug
- 4: Vorderrad
- 6: Hinterrad
- 8: Kältemittelkreislauf
- 10: Kältemittel
- 12: elektromotorischer Kältemittelverdichter
- 14: Kondensator
- 16: Verdampfer
- 18: Bus-System
- 20: Kraftfahrzeugsteuerung
- 22: Bordnetz
- 24: Batterie
- 26: Sicherungseinrichtung
- 28: Drehachse
- 30: bürstenloser Elektromotor
- 32: Rotor
- 34: Stator
- 36: Welle
- 38: Verdichterkopf
- 40: Elektronik
- 42: Gehäuse
- 44: Zulauf
- 46: Ablauf
- 48: Trennwand
- 50: Elektronikgehäuse
- 52: Durchkontaktierung
- 54: Gehäusedeckel
- 56: Umrichter
- 58: Brückenzweig
- 60: Halbleiterschalter
- 62: Zwischenkreiskondensator
- 64: erster Teilmotor
- 66: zweiter Teilmotor
- 68: elektrische Spule
- 70: Permanentmagnet
- 72: Verfahren
- 74: erster Arbeitsschritt
- 76: Leistungsanforderung
- 78: zweiter Arbeitsschritt
- 80: erster Schaltpunkt
- 82: Ansteuerwinkel
- 84: dritter Arbeitsschritt
- 86: zweiter Schaltpunkt
- 88: Verschiebewinkel
- 90: vierter Arbeitsschritt
- 92: erster Phasenwinkel
- 94: Kennfeld
- 95: fünfter Arbeitsschritt
- 96: erster Grenzwert
- 98: Schritt
- 100: zweiter Phasenwinkel
- 102: zweiter Grenzwert
- 104: erster Symmetriewinkel
- 106: zweiter Symmetriewinkel
- 108: sechster Arbeitsschritt
- 110: Fehler
- 112: siebter Arbeitsschritt
- 114: achter Arbeitsschritt
- 116: neunter Arbeitsschritt

- A, B, C: Phasen des ersten Teilmotors
- U, V, W: Phasen des zweiten Teilmotors
- I: Stromfluss

## Patentansprüche

1. Verfahren (72) zum Betrieb eines bürstenlosen Elektromotors (30) eines Kraftfahrzeugs (2), insbesondere eines elektromotorischen Kältemittelverdichters (12), mit zwei abschnittsweise angeordneten Teilmotoren (64, 66), die jeweils n-Phasen (A, B, C, U, V, W) aufweisen, mittels eines zur Anzahl der Phasen (A, B, C, U, V, W) des Elektromotors (30) korrespondierenden Umrichters (56), wobei jeder der Teilmotoren (64, 66) einen zusammenhängenden Umfangsabschnitt des Elektromotors (30) bildet, sodass die Statoren der jeweiligen Teilmotoren (64, 66) abschnittsweise angeordnet sind und den Stator (34) des Elektromotors (30) bilden, wobei der Elektromotor (30) lediglich einen einzigen Rotor (32) aufweist, der den beiden Teilmotoren (64,66) zugeordnet ist, bei welchem
- anhand einer Leistungsanforderung (76) erste Schaltpunkte (80) für die n-Phasen (A, B, C) eines der Teilmotoren (64) bestimmt werden,
- anhand der Leistungsanforderung (76) zweite Schaltpunkte (86) für die n-Phasen (U, V, W) des anderen Teilmotors (66) bestimmt werden,
- die zweiten Schaltpunkte (86) um einen ersten Phasenwinkel (92) verschoben werden, und
- der Umrichter (56) anhand der ersten Schaltpunkte (80) und der zweiten Schaltpunkte (86) angesteuert wird,
wobei der erste Phasenwinkel (92) derart gewählt wird, dass ein resultierender Stromfluss (I) über den Umrichter (56) kleiner als ein erster Grenzwert (96) ist.

2. Verfahren (72) nach Anspruch 1, bei dem jeder der n-Phasen (U, V, W) des anderen Teilmotors (66) jeweils ein erster Phasenwinkel (92) zugeordnet wird.

3. Verfahren () nach Anspruch 1 oder 2, bei dem die ersten Schaltpunkte (80) für die n-Phasen (A, B, C) des einen der Teilmotoren (64) untereinander um einen zweiter Phasenwinkel (100) verschoben werden, wobei der zweite Phasenwinkel (100) derart gewählt wird, dass der resultierender Stromfluss (I) über den Umrichter (56) kleiner ein zweiter Grenzwert (102) ist.

4. Verfahren (72) nach einem der Ansprüche 1 bis 3, bei dem der erste Phasenwinkel (92) anhand eines Kennfelds (94) bestimmt wird.

5. Verfahren (72) nach einem der Ansprüche 1 bis 3, bei dem der erste Phasenwinkel (92) iterativ bestimmt wird.

6. Verfahren (72) nach Anspruch 5, bei dem der erste Phasenwinkel (92) in festen Schritten (98) verändert wird.

7. Verfahren (72) nach einem der Ansprüche 1 bis 6, bei dem der erste Phasenwinkel (92) erneut bestimmt wird, wenn die Leistungsanforderung (76) geändert wird.

8. Verfahren (72) nach einem der Ansprüche 1 bis 7, bei dem die unverschobenen zweiten Schaltpunkte (86) den phasenversetzten ersten Schaltpunkten (80) oder den phasenversetzten invertierten ersten Schaltpunkten (86) entsprechen.

9. Verfahren (72) nach einem der Ansprüche 1 bis 8, bei dem die ersten Schaltpunkte (80) verworfen werden, wenn ein Fehler (110) bei dem einen der Teilmotoren (64) bestimmt wird, oder bei dem die zweiten Schaltpunkte (86) verworfen werden, wenn ein Fehler (110) bei dem anderen Teilmotor (66) bestimmt wird.

10. Aggregat (12) eines Kraftfahrzeugs (2), insbesondere elektromotorischer Kältemittelverdichter, das einen bürstenlosen Elektromotor (30) mit zwei abschnittsweise angeordneten Teilmotoren (64, 66), die jeweils n-Phasen (A, B, C, U, V, W) aufweisen, und einen zur Anzahl der Phasen (A, B, C, U, V, W) des Elektromotors (30) korrespondierenden Umrichter (56) aufweist, wobei jeder der Teilmotoren (64, 66) einen zusammenhängenden Umfangsabschnitt des Elektromotors (30) bildet, sodass die Statoren der jeweiligen Teilmotoren (64, 66) abschnittsweise angeordnet sind und den Stator (34) des Elektromotors (30) bilden, wobei der Elektromotor (30) lediglich einen einzigen Rotor (32) aufweist, der den beiden Teilmotoren (64,66) zugeordnet ist, und das gemäß einem Verfahren (72) nach einem der Ansprüche 1 bis 9 betrieben ist.

## Claims

1. Method (72) for operating a brushless electric motor (30) of a motor vehicle (2), in particular an electromotive refrigerant compressor (12), comprising two motor elements (64, 66), which are arranged in sections and each have n phases (A, B, C, U, V, W), by means of a converter (56) corresponding to the number of phases (A, B, C, U, V, W) of the electric motor (30), wherein each of the motor elements (64, 66) forms a cohesive circumferential section of the electric motor (30), so that the stators of the respective motor elements (64, 66) are arranged in sections and form the stator (34) of the electric motor (30), wherein the electric motor (30) has only one single rotor (32) which is associated with the two motor elements (64, 66), in which method
- first switching points (80) are determined for the n phases (A, B, C) of one of the motor elements (64) based on a power requirement (76),
- second switching points (86) are determined for the n phases (U, V, W) of the other motor element (66) based on the power requirement (76),
- the second switching points (86) are shifted by a first phase angle (92), and
- the converter (56) is actuated based on the first switching points (80) and the second switching points (86),
wherein the first phase angle (92) is selected in such a way that a resulting flow of current (I) across the converter (56) is lower than a first limit value (96).

2. Method (72) according to Claim 1, in which in each case a first phase angle (92) is associated with each of the n phases (U, V, W) of the other motor element (66).

3. Method () according to Claim 1 or 2, in which the first switching points (80) for the n phases (A, B, C) of one of the motor elements (64) are shifted with respect to one another by a second phase angle (100), wherein the second phase angle (100) is selected in such a way that the resulting flow of current (I) across the converter (56) is lower than a second limit value (102).

4. Method (72) according to one of Claims 1 to 3, in which the first phase angle (92) is determined based on a characteristic map (94).

5. Method (72) according to one of Claims 1 to 3, in which the first phase angle (92) is determined iteratively.

6. Method (72) according to Claim 5, in which the first phase angle (92) is changed in fixed steps (98).

7. Method (72) according to one of Claims 1 to 6, in which the first phase angle (92) is determined again when the power requirement (76) is changed.

8. Method (72) according to one of Claims 1 to 7, in which the non-shifted second switching points (86) correspond to the phase-offset first switching points (80) or to the phase-offset, inverted first switching points (86).

9. Method (72) according to one of Claims 1 to 8, in which the first switching points (80) are discarded when a fault (110) is determined in one of the motor elements (64) or in which the second switching points (86) are discarded when a fault (110) is determined in the other motor element (66).

10. Unit (12) of a motor vehicle (2), in particular electromotive refrigerant compressor, which has a brushless electric motor (30) comprising two motor elements (64, 66), which are arranged in sections and each have n phases (A, B, C, U, V, W), and a converter (56) corresponding to the number of phases (A, B, C, U, V, W) of the electric motor (30), wherein each of the motor elements (64, 66) forms a cohesive circumferential section of the electric motor (30), so that the stators of the respective motor elements (64, 66) are arranged in sections and form the stator (34) of the electric motor (30), wherein the electric motor (30) has only one single rotor (32) which is associated with the two motor elements (64, 66), and which unit is operated in accordance with a method (72) according to one of Claims 1 to 9.

## Revendications

1. Procédé (72) de fonctionnement d'un moteur électrique sans balais (30) d'un véhicule automobile (2), en particulier d'un compresseur frigorifique à moteur électrique (12), pourvu de deux parties de moteur (64, 66) qui comportent chacune n phases (A, B, C, U, V, W), au moyen d'un convertisseur (56) correspondant au nombre de phases (A, B, C, U, V, W) du moteur électrique (30), chacune des parties de moteur (64, 66) formant une portion circonférentielle continue du moteur électrique (30) de sorte que les stators des parties de moteur respectives (64, 66) soient disposés par portions et forment le stator (34) du moteur électrique (30), le moteur électrique (30) ne comportant qu'un seul rotor (32) qui est associé aux deux parties de moteur (64, 66) et dans lequel
- des premiers points de commutation (80) destinés aux n phases (A, B, C) de l'une des parties de moteur (64) sont déterminés sur la base d'une demande de puissance (76),
- des deuxièmes points de commutation (86) destinés aux n phases (U, V, W) de l'autre partie de moteur (66) sont déterminés sur la base de la demande de puissance (76),
- les deuxièmes points de commutation (86) sont décalés d'un premier angle de phase (92), et
- le convertisseur (56) est commandé sur la base des premiers points de commutation (80) et des deuxièmes points de commutation (86), le premier angle de phase (92) étant sélectionné de telle sorte qu'un flux de courant résultant (I) via le convertisseur (56) soit inférieur à une première valeur limite (96).

2. Procédé (72) selon la revendication 1, dans lequel chacune des n phases (U, V, W) de l'autre partie de moteur (66) est associée à un premier angle de phase (92) .

3. Procédé () selon la revendication 1 ou 2, dans lequel les premiers points de commutation (80) des n phases (A, B, C) de l'une des parties de moteur (64) sont décalés les uns des autres d'un deuxième angle de phase (100), le deuxième angle de phase (100) étant sélectionné de telle sorte que le flux de courant résultant (I) via le convertisseur (56) soit inférieur à une deuxième valeur limite (102).

4. Procédé (72) selon l'une des revendications 1 à 3, dans lequel le premier angle de phase (92) est déterminé à partir d'un diagramme caractéristique (94).

5. Procédé (72) selon l'une des revendications 1 à 3, dans lequel le premier angle de phase (92) est déterminé de manière itérative.

6. Procédé (72) selon la revendication 5, dans lequel le premier angle de phase (92) est modifié par étapes fixes (98).

7. Procédé (72) selon l'une des revendications 1 à 6, dans lequel le premier angle de phase (92) est à nouveau déterminé lorsque la demande de puissance (76) est modifiée.

8. Procédé (72) selon l'une des revendications 1 à 7, dans lequel les deuxièmes points de commutation (86) non décalés correspondent aux premiers points de commutation (80) déphasés ou aux premiers points de commutation (86) inversés déphasés.

9. Procédé (72) selon l'une des revendications 1 à 8, dans lequel les premiers points de commutation (80) sont écartés si un défaut (110) est déterminé dans l'une des parties de moteur (64), ou dans lequel les deuxièmes points de commutation (86) sont écartés si un défaut (110) est déterminé dans l'autre partie de moteur (66).

10. Unité (12) d'un véhicule automobile (2), en particulier un compresseur frigorifique à moteur électrique, qui comporte un moteur électrique sans balais (30), pourvu de deux parties de moteur (64, 66) disposées par portions et comportant chacune n phases (A, B, C, U, V, W), et un convertisseur (56) correspondant au nombre de phases (A, B, C, U, V, W) du moteur électrique (30), chacune des parties de moteur (64, 66) formant une portion circonférentielle continue du moteur électrique (30) de sorte que les stators des parties de moteur respectives (64, 66) soient disposés par portions et forment le stator (34) du moteur électrique (30), le moteur électrique (30) ne comportant qu'un seul rotor (32) qui est associé aux deux parties moteurs (64, 66) et qui fonctionne selon un procédé (72) selon l'une des revendications 1 à 9.
